# EUROPÄISCHE PATENTSCHRIFT

(11) **EP 0 477 725 B1**
(45) Veröffentlichungstag und Bekanntmachung des Hinweises auf die Patenterteilung: **06.07.1994**
(21) Anmeldenummer: 91115730.3
(22) Anmeldetag: 17.09.1991
(51) Int. Cl.: B25J 9/08, B25J 19/00, B25J 17/02

(54) **Multiblock-Robot**
Modular robot
Robot modulaire

(30) Priorität: 24.09.1990 DE 4030119
(43) Veröffentlichungstag der Anmeldung: 01.04.1992
(73) Patentinhaber: Kochanneck, Uwe, D-44145 Dortmund (DE)
(72) Erfinder: Kochanneck, Uwe, D-44145 Dortmund (DE)

(56) Entgegenhaltungen:
- EP-A- 0 233 712
- DE-A- 3 704 951
- FR-A- 2 324 407
- FR-A- 2 632 561
- FR-A-25 992 90
- GB-A- 2 053 148
- GB-A- 2 143 205

## Beschreibung

Die Erfindung betrifft einen Robot der im Oberbegriff des Patentanspruchs 1 genannten Art.

Es sind Robots bekannt, die als kompakte Gesamt-Konstruktionen und zusammengefaßte Baugruppen in Schweiß- und Schraubtechnik mit elektromechanischen- und hydraulischen Komponenten ausgerüstet, mehrachsig einsetzbar sind. Siehe z.B. GB-A-2 053 148 Die mehrachsigen Bewegungsfreiheitsgrade werden durch unterschiedliche Drehantriebe, Linearantriebe, Getriebe, Riemenscheiben, Kupplungsstangen und Seilzüge mit entsprechend angepaßten Mantelgehäusen erreicht. Die Entwicklung und Konstruktion dieser Robots für spezifische Automatisierungsaufgaben ist verhältnismäßig aufwendig. Für die Anpaßung an Veränderungen im Anwenderumfeld sind sie außerdem relativ unflexibel.

Aufgabe der vorliegenden Erfindung ist es, Robots der eingangs genannten Art zu schaffen, die in Entwicklung und Konstruktion mit minimalem Aufwand für spezifische Aufgaben erstellt werden können und die mit wenigen Handgriffen, von den Anwendern selbst für ein anderes Wirkungsspektrum umgebaut werden können.

Zur Lösung dieser Aufgabe ist gemäß der Erfindung vorgesehen, daß aus annähernd baugleichen Robot-Block-Normteilen Multiblock-Robots mit selbstoperierenden Geh- Fahr- und Manipulationseigenschaften montiert werden, die mit zueinanderpaßenden, horizontalen- und vertikalen Drehflansch-Steckverbindungen ausgeführt werden, wobei jede Drehflansch-Steckverbindung mit Einraststeckern und federbelasteten Einrastklemmhebeln ausgerüstet ist und eine Drehverbindung mit Antriebsmotoren erhält und mittig durch die Drehflansch-Steckverbindungen ein Strom- und Kommunikationskanal hindurchführt der Strom- und Versorgungsleitungen und Kommunikations- und Steuerleitungen aufnimmt die zu inneren- und äußeren Schleifring- und Induktivkörpern und zu weiteren Drehflansch-Steckverbindungen, zu den Antriebsmotoren und je nach Anwendungs-Zielsetzungen, zu Einbauelementen, bestehend aus Akkumulatoren, aus Sensoren, aus Elektronikplatinen im Inneren der Blockgehäuse führen, daß die Strom- und Versorgungsleitungen an den Enden des Strom- und Kommunikationskanals in Steckereinheiten mit Steckkontakten und in Steckerbuchsen-Einheiten mit Steckerbuchsen geführt werden wobei die Drehflansch-Steckverbindungen mit dem mittigen Strom- und Informationsleitungskanal über die Drehverbindungen und die Antriebsmotoren um die eigene Mittelachse gedreht und angetrieben werden und das Blockgehäuse still steht, daß die Drehflansch-Steckverbindungen mit dem Strom- und Kommunikationskanal still steht und nur das Blockgehäuse rotiert, daß die Drehflansch-Steckverbindung mit dem Strom- und Kommunikationskanal und das Robot-Blockgehäuse gemeinsam, über das Robot-Block-Normteil einer Nachbar-Drehflansch-Steckverbindung angetrieben werden, oder aber nur die Drehflansch-Steckverbindung mit dem Strom- und Kommunikationskanal durch eine Nachbar-Drehflansch-Steckverbindung angetrieben wird und dabei das Blockgehäuse still steht und daß durch die Drehflansch- zu Drehflansch-Steckverbindungen ein zusammengesteckter Multiblock-Robotaufbau über die Zentrierung durch die Einraststecker, die Klemmwirkung der federbelasteten Einrastklemmhebel, den Kontaktschluß der Steckereinheiten und der Steckerbuchsen-Einheit zueinander und der Robot-Block-Normteile untereinander erreicht wird, der über die Drehverbindungen und die Antriebsmotoren, durch reine Drehkraftübertragungen, je nach Zusammenstecken von Robot-Block-Normteilen mit unterschiedlichen Anwendungs-Zielsetzungen, variierbare Manipulations- und Fortbewegungen in mehrachsigen Bewegungsfreiheitsgraden durchgeführt werden.

Hiermit ist gegenüber dem nächstkommenden Stand der Technik erreicht, daß rein durch Variieren in der beliebigen Anordnung der Robot-Block-Normteile zueinander und der Vertauschung des Anschlußes der unterschiedlichen Drehflansch-Steckanschlüsse pro Robot-Block-Normteil, eine hohe Zahl von Kombinationsmöglichkeiten, mit jeweils anderen Bewegungsaddierungen und Kraftwirkungen in den Robot-Block-Endgliedern erreicht wird und so das Erstellen von neuen Robotertypen lediglich durch Vertauschen, Drehen und Neu-Anflanschen der Robot-Block-Normteile erfolgt. Außerdem erfolgt durch den reinen Dreh-Bewegungsablauf für alle Normteile des Multiblock-Robots eine kostengünstige Syststembereinigung und der Ersatz von Hydraulikelementen, geradlinigen, mechanischen Schubstangen, Ketten und Seilzügen durch weitgehend baugleiche Antriebsmotoren und Drehverbindungen, wobei die Strom- und Kommunikationsübertragung koordiniert, immer zentral durch die Drehflansch-Steckverbindungen geführt wird und keine Behinderung im Bewegungsablauf des Robots, durch Außen- oder Innenkabel und Leitungen oder andere Steuerungsteile möglich ist. Die Robot-Block-Normteile können gesondert getestet und programmiert werden und die Weiterentwicklung beschränkt sich auf die Entwicklung von Robot-Block-Normteilen, statt gesamter Roboter-Baueinheiten. Die Robot-Block-Normteile können bei vergleichbarer gleicher Leistung kleiner gebaut werden und werden durch die hohe Anzahl der annähernd baugleichen Robot-Block-Normteile pro Multiblock-Robot in der Fertigung kostengünstiger. Die Anwender können durch schnelles Umstecken der Robot-Block-Normteile, neue Robotwirkungen erreichen und den Multi-Block Robot sehr schnell auf andere Funktionsabläufe und Automatisierungsaufgaben umstellen. Besondere Anwenderwünsche die durch die vorhandenen Robot-Block-Normteile aus denen der Multiblock-Robot aufgebaut ist nicht erfüllt werden, können durch Austausch oder durch zusätzliche Nachrüstung spezifischer Robot-Block-Normteile, jederzeit durch Lösen und Neu-Aufstecken der Drehflansch-Steckverbindungen ermöglicht werden.
Ausgestaltungen der Erfindung sind in den Unteransprüchen genannt.
Die Erfindung wird im folgenden anhand von Ausführungsbeispielen, mit Bezug auf die Zeichnung näher erläutert. In dieser zeigt
Fig. 1 ein Robot-Block-Normteil 1 mit zwei horizontalen Drehflansch-Steckverbindungen 2, im mittiger Vertikalschnitt-Darstellung,
Fig. 2, das Robot-Block-Normteil 1 gemäß der Fig. 1 in der Draufsicht,
Fig. 3, das Robot-Block-Normteil 1 mit zwei horizontalen Drehflansch-Steckverbindungen 2 und zwei vertikalen Drehflansch-Steckverbindungen 2, in mittiger Vertikalschnitt-Darstellung,
Fig. 4, ein Robot-Block-Normteil 1 mit zwei horizontalen Drehflansch-Steckverbindungen 2 und vier vertikalen Drehflansch-Steckverbindungen 2, in mittiger Vertikalschnitt-Darstellung,
Fig. 5, vier Robot-Block-Normteile 1 in mittiger Vertikalschnitt-Darstellung vor dem Zusammenbau, der in Pfeilrichtungen an den jeweils gegenüberliegenden Drehflansch-Steckverbindungen 2 erfolgt,
Fig. 6, ein Robot-Block-Normteil 1 mit zwei horizontalen Drehflansch-Steckverbindungen 2 und vier vertikalen Drehflansch-Steckverbindungen 2, in mittiger Vertikalschnitt-Darstellung,
Fig. 7, einen Multi-Block-Robot aus Robot-Block-Normteilen 1 funktionsfertig zusammengesteckt, in der Vorderansicht,
Fig. 8, einen Multi-Block-Robot bestehend aus einer Vielzahl von Robot-Block-Normteilen 1 im oberen und unteren Zeichnungsteil in der Vorderansicht und im unteren Zeichnungsteil mit leicht veränderten Einbauteilen 11 und jeweils neben der Vorderansicht, den Bewegungsablauf in den Seitenansichten,
Fig. 9, einen Multi-Block-Robot bestehend aus einer Vielzahl von Robot-Block-Normteilen 1 in der Vorderansicht, mit zwei Robot-Block-Normteilen 1 in mittiger Vertikalschnitt-Darstellung,

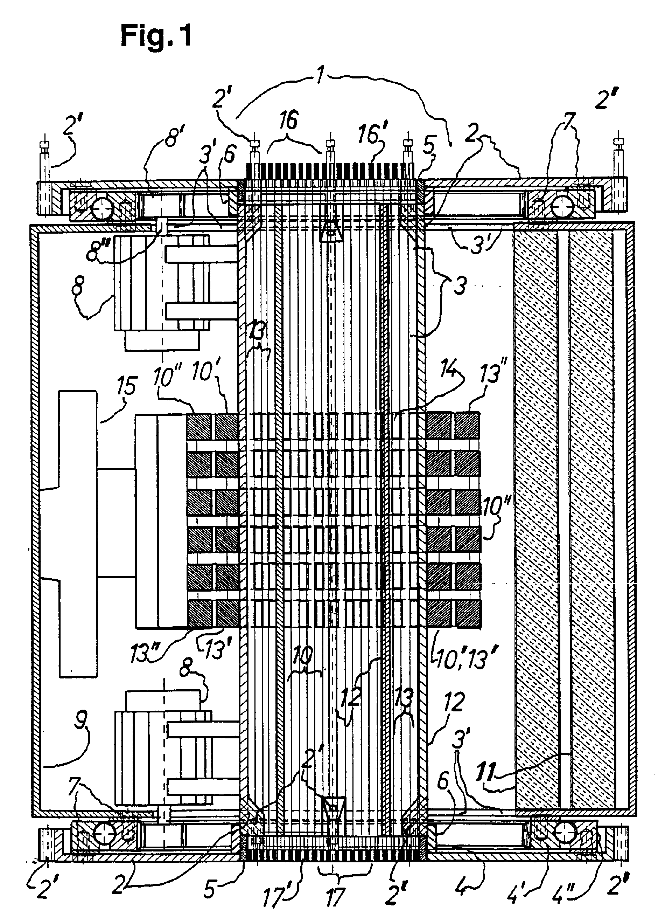

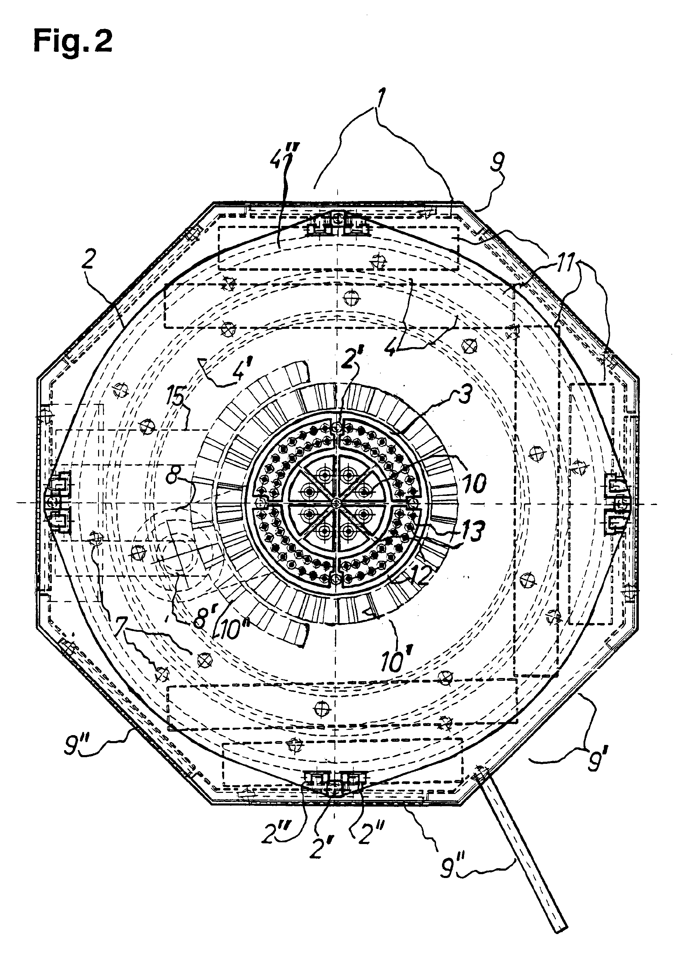

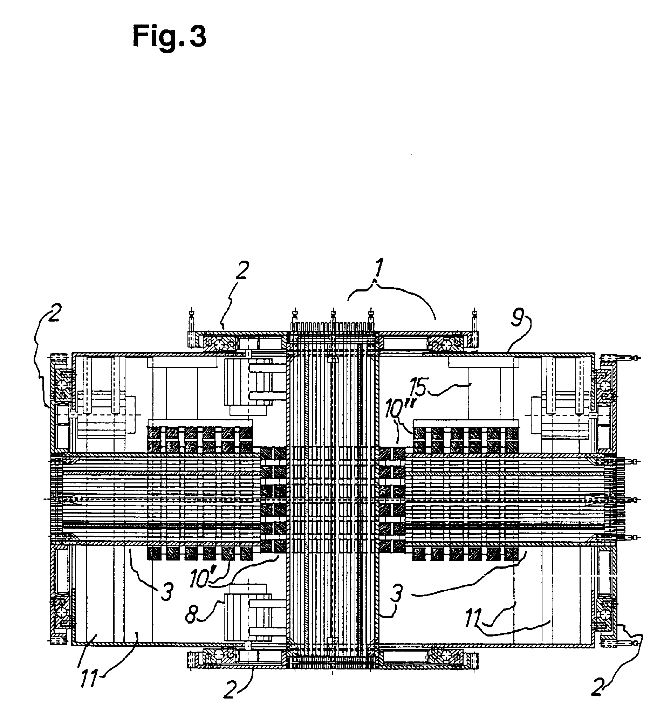

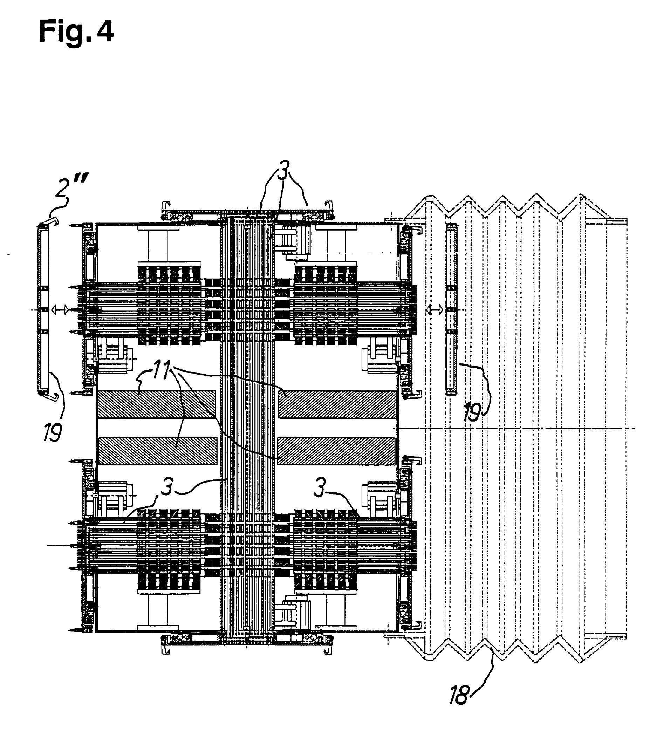

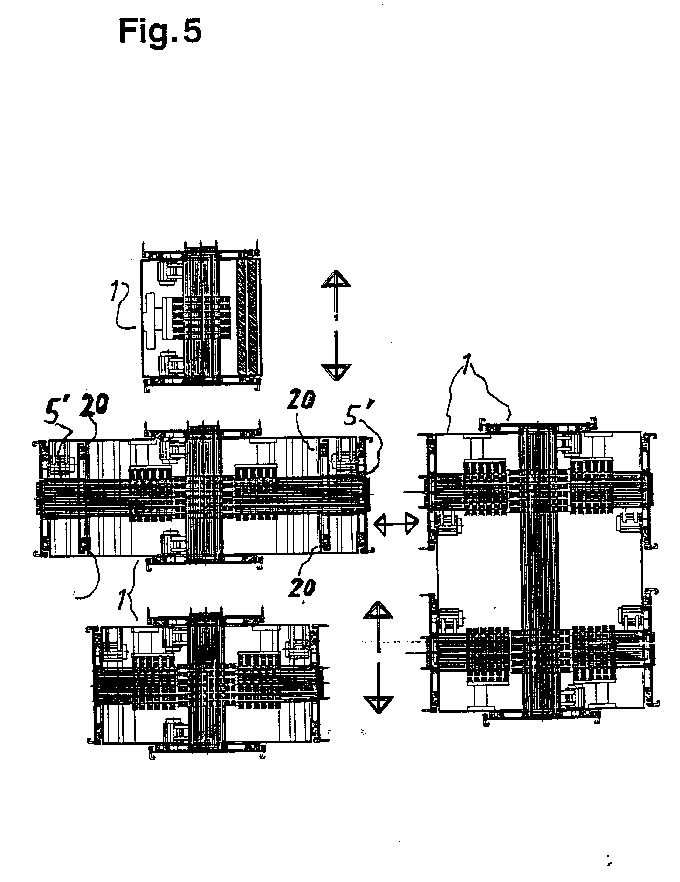

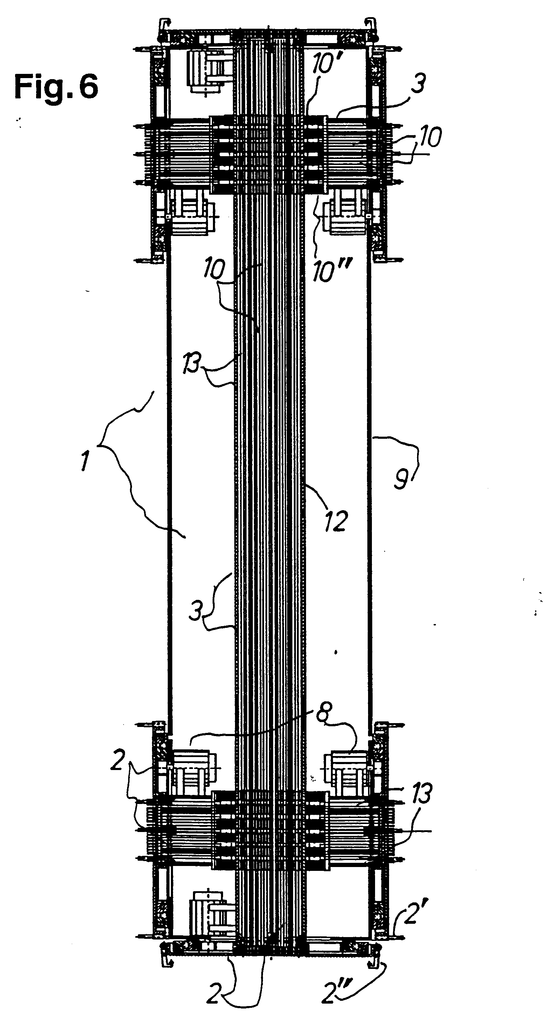

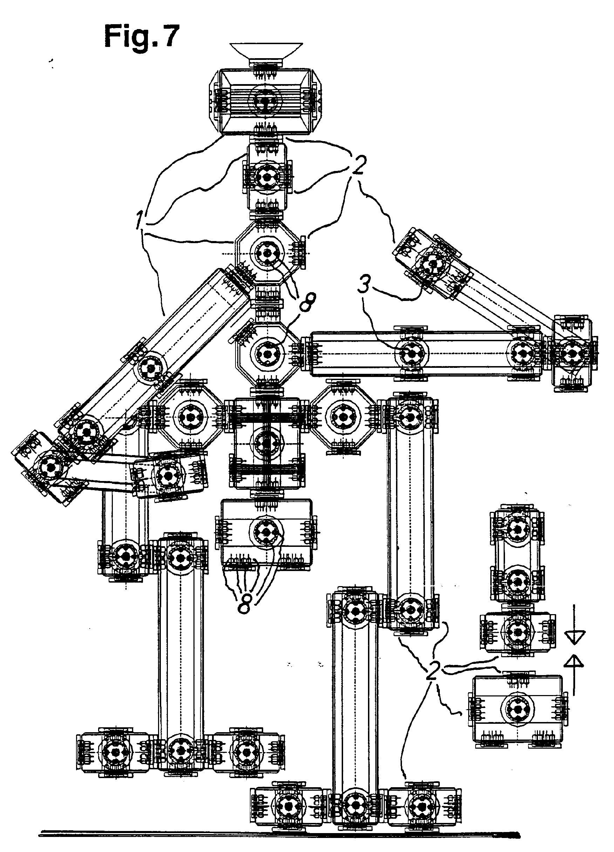

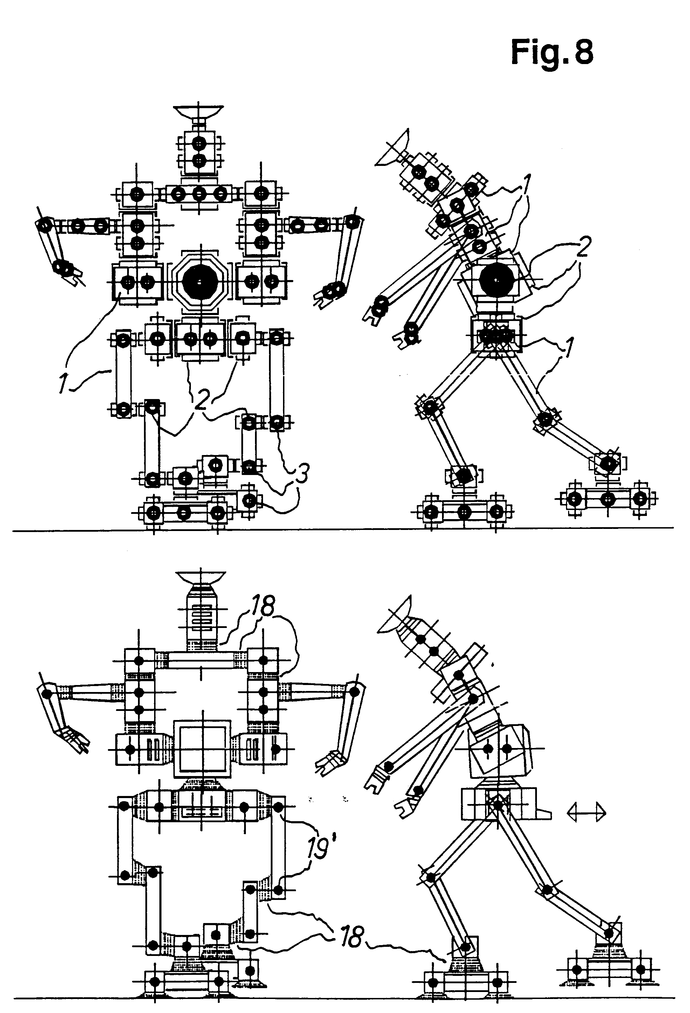

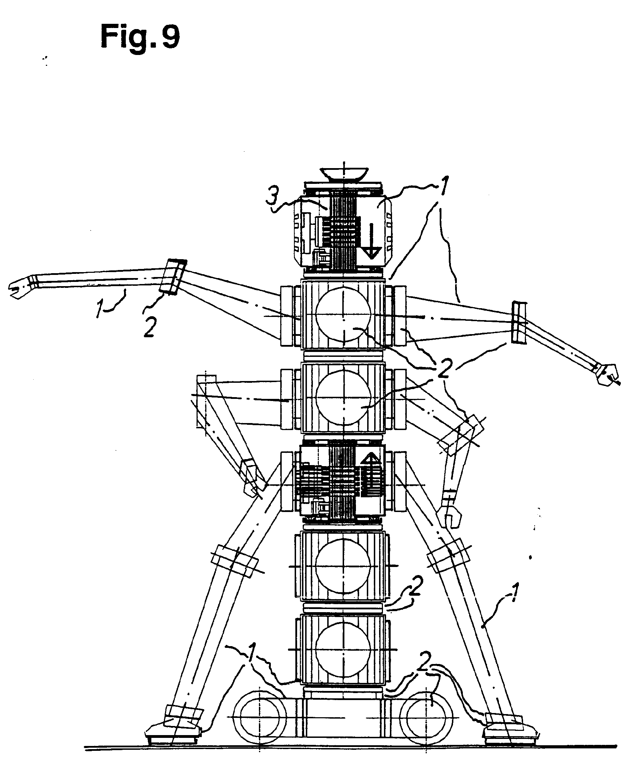

Gemäß der Fig. 1 und 2 enthält ein Robot-Block-Normteil 1 immer zumindest einen, durch das Robot-Block-Normteil 1 hindurchgeführten vertikalen oder horizontalen Strom- und Kommunikationskanal 3 und zwei vertikale oder horizontale Drehflansch-Steckverbindungen 2, die an den Enden des Strom- und Kommunikationskanals 3, mit den Anschraubringen 5 und 6, fest verschraubt werden. Jede Drehflansch-Steckverbindung 2 ist mit einer Drehverbindung 4 durch die Drehflansch-Befestigungsschrauben 7 entweder am Drehverbindungs-Innenring 4′ oder am Drehverbindungs-Außenring 4˝ fest verschraubt. Der Drehverbindungs-Innenring 4′ wird mit einem Drehkranz ausgeführt in den das Antriebsritzel 8′ des Antriebsmotors 8 eingreift. Das Blockgehäuse 9 erhält im Bereich des Endaustritts des Strom- und Kommunikationskanals 3, Durchgangsöffnungen 3′ für das freie Hindurchführen des Strom- und Kommunikationskanals 3 und des Antriebsritzels 8′ mit Antriebsschaft 8˝, durch die Wandung des Block-gehäuses 9. Das Blockgehäuse 9 wird entweder am Drehverbindungs-Innenring 4′ oder am Drehverbindungs-Außenring 4˝ mit den Drehverbindungs-Befestigungsschrauben 7 fest verschraubt. Wenn das Blockgehäuse 9 mit dem Drehverbindungs-Innenring 4′ verschraubt ist, erfolgt die Befestigung des Drehverbindungs-Außenrings 4˝, an der Drehflansch-Steckverbindung 2 und der Antriebsmotor 8 wird an der Außenwand des Strom- und Kommunikationskanals 3 befestigt. Der Antriebsmotor 8 treibt nun das Block-gehäuse 9 an, das um die Mittelachse der Drehflansch-Steckverbindung 2 rotiert, während die Drehflansch-Steckverbindung 2 und der Strom- und Kommunikationskanal 3 still steht. Wenn das Blockgehäuse 9 mit dem Drehverbindungs-Außenring 4˝ verschraubt ist, erfolgt die Verschraubung des Drehverbindungs-Innenrings 4′, an der Drehflansch-Steckverbindung 2 und der Antriebsmotor 8 wird an der Innenwand des Blockgehäuses 9 befestigt. Der Antriebsmotor 8 treibt nun die Drehflansch-Steckverbindung 2 mit dem Strom- und Kommunikationskanal 3 an, der um die eigene Mittelachse der Drehflansch-Steckverbindung 2 dreht. Das Blockgehäuse 9 selbst, bleibt dabei nun in Ruhe stehen. Die Drehflansche der Drehflansch-Steckverbinder 2 werden am äußeren Rand und im Kernbereich des Strom- und Kommunikationskanals 3 mit Einrast-Steckern 2′ und federbelasteten Klemmhebeln 2˝ ausgeführt. Das Blockgehäuse 9 erhält in den Außenwandungen Zugriffsöffnungen 9′ für die Wartung und den Zugriff zu den Bauteilen im Inneren des Blockgehäuses 9, die über federbelastete Drehklappen 9˝ verschließbar sind. Der Strom- und Kommunikationskanal 3 führt Strom- und Versorgungsleitungen 10 für die Antriebsmotoren 8 und zu oder von den Bauelementen 11 im mehrfach untereinander und gegeneinander durch Schottwandungen 12 abgeschirmten Kern des Strom- und Kommunikationskanals 3. Um den Kern des Strom- und Kommunikationskanals 3 herum, liegt ein Ringbereich der auch zueinander und zum Kernbereich durch Schottwandungen 12 abgeschirmt ist. In diesem Ringbereich werden Kommunikations-und Steuerungsleitungen 13 für die Steuerungs- und Impulsübertragung zu oder von den Antriebsmotoren 8 und zu oder von den Bauelementen 11, im Inneren des Blockgehäuses 9 untergebracht. Die Strom- und Versorgungsleitungen 10 werden über Austrittsöffnungen 14 in der Wandung des Strom- und Kommunikationskanals 3 zu ringförmigen, inneren Schleifring- und Induktivkörpern 10′ geführt. Die Kommunikations- und Steuerungsleitungen 13 werden ebenfalls über die Austrittsföffnungen 14 zu ringförmigen, inneren Schleifring- und Induktivkörpern 13′ geführt. Der innere Schleifring- und Induktivkörper 10′,13′ ist fest mit den Schottwandungen 12, des Strom- und Kommunikationskanals 3 verbunden. Der äußere Schleifring- und Induktivkörper 10˝,13˝ ist über den Schleifring- und Induktivkörper-Halter 15 fest mit dem Blockgehäuse 9 verbunden. Die Einbauelemente 11 im Inneren des Blockgehäuses 9 bestehen aus Akkumulatoren, Sensorelementen, Elektronik-Platinen für die Steuerung des Robot-Block-Normteils 1, entsprechend der Anwendungs-Zielsetzung des gesamten Multiblock-Robot Aufbaus und aus weiteren steuerungs- technischen Einbauelementen 11, die über die Zugriffsöffnungen 9′ jederzeit ausgetauscht und gewartet werden können. Die Strom- und Versorgungsleitungen 10 und die Kommunikations- und Steuerleitungen 13 laufen zum Teil von der unteren bis zur oberen horizontalen Drehflansch-Steckverbindungen 2, ohne Einmündung in die Austrittsöffnungen 14 des Strom- und Kommunikationskanals 3, frei durch. Die obere horizontale Drehflansch-Steckverbindung 2 führt eine Steckereinheit 16 mit einer Anzahl an Steckerkontakten 16′, entsprechend der Anzahl der dort einmündenden Strom- und Versorgungsleitungen 10 und der Kommunikations- und Steuerleitungen 13. Die untere horizontale Drehflansch-Steckverbindung 2 des Strom- und Kommunikationskanals 3 ist mit einer Steckerbuchsen-Einheit 17 ausgeführt, mit einer Anzahl von Steckerbuchsen 17′, entsprechend der Anzahl der dort einmündenden Strom- und Versorgungsleitungen 10 und der Kommunikations- und Steuerleitungen 13. Ein Teil der Strom- und Versorgungsleitungen 10 führt von der Steckerbuchsen-Einheit zu den Austrittsöffnungen 14 und zu den Einbauelementen 11 in das Innere des Blockgehäuses 9. Je nach Anwendungs-Zielrichtung des Robot-Block-Normteils 1 wird ein weiterer, entsprechender Teil von Strom- und Versorgungsleitungen 10 und von Kommunikations- und Steuerleitungen 13 dann von dem Inneren des Gehäuseblocks 9, über die äußeren Schleifring- und Induktivkörper 10˝,13˝, die inneren Schleifring- und Induktivkörper 10′,13′, über die Austrittsöffnungen 14 in den Strom- und Kommunikationskanal 3 bis zu der Steckereinheit 16 und den Steckerkontakten 16′ geführt oder zu der gegenüberliegenden Steckerbuchsen-Einheit 17 mit den Steckerbuchsen 17′.
Die vertikalen Drehflansch-Steckverbindungen 2 des Robot-Block-Normteils 1 der Fig. 3 werden je mit einem horizontalen Strom- und Kommunikationskanal 3 verschraubt der zu dem vertikalen Strom- und Kommunikationskanal 3 der horizontalen Drehflansch-Steckverbindungen 2 führt und dort endet. Die Antriebsmotoren 8 der vertikalen Drehflansch-Steckverbindungen 2 sind am Blockgehäuse 9 befestigt. Der Drehverbindungs-Innenring 4′ wird mit den Drehverbindungs-Befestigungsschrauben 7 an den Drehflansch-Steckverbindungen 2 fest verschraubt. Der Drehverbindungs-Außenring 4˝ wird mit den Drehverbindungs-Befestigungsschrauben 7 am Blockgehäuse 9 fest verschraubt. Der Antriebsmotor 8 der horizontalen Drehflansch-Steckverbindung 2 links, dreht nur die Drehflansch-Steckverbindung 2 links, während das Blockgehäuse 9 still steht. Entsprechend erfolgt bei Antrieb des Antriebsmotors 8 der rechtsseitigen Drehflansch-Steckverbindung 2, eine Rotierung dieser Drehflansch-Steckverbindung 2 mit dem dazugehörigen, bis zum mittigen, inneren Schleifring- und Induktivkörper 10′ reichenden, rechtsseitigen, vertikalen Strom- und Kommunikationskanal 3. Der horizontale Strom- und Kommunikationskanal 3 reicht bei der linken, horizontalen Drehflansch-Steckverbindung 2 von der Steckerbuchsen-Einheit 17 mit dem Ziel der freien Drehung um die eigene Mittelachse, nur bis zum inneren Schleifring- und Induktivkörper 10′,13′ des vertikalen Strom- und Kommunikationskanals 3 und bei der rechten, horizontalen Drehflansch-Steckverbindung 2 von der Steckereinheit 16 ebenfalls bis zum inneren Schleifring- und Induktivkörper 10′,13′ des vertikalen Strom- und Kommunikationskanals 3. Auf das zur Mitte des Blockgehäuses 9 gerichtete Ende der links- und rechtsseitigen, horizontalen Strom- und Kommunikationskanäle 3 wird je ein äußerer Schleifring- und Induktivkörper 10˝ aufgesetzt, der als richtungsänderndes, ringförmig umschließendes Gegenstück des inneren Schleifring- und Induktivkörpers 10′ des vertikalen Strom- und Kommunikationskanals 3, die Strom- und Impulsübertragung zwischen dem mittigen, vertikalen Schleifring- und Induktivkörper 10′,13′ und des zugehörigen vertikalen Strom- und Kommunikationskanals 3 und der beiden gegenüberliegenden, rechts- und linksseitigen horizontal liegenden Schleifring- und Induktivktörpern 10˝,13˝ mit den zugehörigen horizontalen links- und rechtsseitig liegenden Strom- und Kommunikationskanälen 3 unterteinander ermöglicht. Insofern ist der zentrale, vertikale Strom- und Kommunikationskanal 3 mit seinem Schleifring- und Induktivkörper 10′,13′ Strom- und Kommunikations-Impulsverteiler nach links und rechts. An den Schottwandungen 12 der beiden links und rechtseitigen Strom- und Kommunikationskanäle 3 sind selbst wieder je ein innerer Schleifring- und Induktivkörper 10′,13′ fest aufgesetzt und die in den Strom- und Kommunikationskanälen 3 geführten Strom- und Versorgungsleitungen 10 und Kommunikations- und Steuerleitungen 13 werden über Austrittsöffnungen 14 in der Wandung der links- und rechtsseitigen Strom- und Kommunikationskanäle 3 zu den innernen Schleifring- und Induktivkörpern 10′,13′ und von dort zu den äußeren Schleifring- und Induktivkörpern 10˝,13˝ geführt, die von den Schleifring- und Induktivkörper-Haltern 15 gestützt werden. Das Robot-Block-Normteil 1 der Fig. 4 besitzt einen vertikal frei durchlaufenden Strom- und Kommunikationskanal 3 mit zwei horizontalen Drehflansch-Steckverbindungen 2 und vier horizontale Strom- und Kommunikationskanäle 3 mit vier vertikalen Drehflansch-Steckverbindungen 2. Links und rechts zu der oberen vertikalen Drehflansch-Steckverbindungen 2 ist eine Abdeckflansch-Steckverbindung 19 gezeichnet, die in Pfeilrichtung auf die Drehflansch-Steckverbindungen 2 aufgesteckt wird und den Strom- und Kommunikationskanal 3 mit Steckereinheit 16 oder mit der Steckerbuchsen-Einheit 17 abdeckt, wenn die entsprechende freie Drehflansch-Steckverbindung 2 des Robot-Block-Normteils 1 nicht zur Verbindung mit einer Drehflansch-Steckverbindung 2 eines weiteren, Robot-Block-Normteiles 1 genutzt wird und frei bleibt. Außerdem ist eine Abdichtung der Drehflansch-Steckverbindung 2 zu Drehsflansch-Steckverbindung 2 über einen drehflexiblen Faltenbalg 18, in strichpunktierten Linien dargestellt. Der drehflexible Faltenbalg 18 wird am Blockgehäuse 9 verschraubt und spannt sich von einem Robot-Block-Normteil 1 zum benachbarten Robot-Block-Normteil 1 über die abzudeckenden und gleichzeitig dicht zu haltenden Drehflansch-Steckverbindungen 2.
Die Robot-Block-Normteile 1 der Fig. 5 sind in ausgerichteter Lage, für das Zusammenstecken in Pfeilrichtung gezeichnet. Das mittlere Robot-Block-Normteil 1 erhält für die Abstützung der lang ausgeführten links- und rechtsseitigen horizontalen Strom- und Kommunikationskanäle 3 und damit der gesamten, horizontalen Drehflansch-Steckverbindung 2, zusätzlich zu der Drehverbindung 4 im Inneren der Drehflansch-Steckverbindung 2, eine weitere Drehverbindung 4 eingesetzt, so daß die horizontalen Drehflansch-Steckverbindungen 2 dieser langgestreckten Robot-Block-Normteile 1, eine Zweipunkt-Drehabstützung erhalten. Die zusätzlichen Drehverbindungen 4 werden mit komplettem Drehflansch eingesetzt und durch die Anschraubringe 5′ auf die Außenwandungen der Strom- und Kommunikationskanäle 3 aufgeschraubt. Dabei wird der Innen- oder Außenring 4′,4˝ der zusätzlichen Drehverbindungen 4 an Stützrippen 20 des Blockgehäuses 9 mit Drehverbindungs-Befestigungsschrauben 7 fest verschraubt. Dadurch ist gleichzeitig die gleiche Antriebsvoraussetzung mit dem wahlweisen Antrieb der Drehflansch-Steckverbindungen 2 oder des Blockgehäuses 9 durch einen weiteren Antriebsmotor 8 gegeben. Bei zusätzlichem Antrieb 8 der zusätzlichen, stützenden Drehverbindungen 6 im Inneren des Blockgehäuses 9 und Festschraubung entweder des inneren Drehringes 3′ an den Stützrippen 20 und entgegengesetztem Festschrauben des äußeren Drehringes 3˝ am Drehflansch der Drehflansch-Steckverbindung 2 oder umgekehrt, kann somit wechselseitig entweder die Rotation der Drehflansch-Steckverbindung 2 mit Strom- und Kommunikationskanal 3 oder aber des Blockgehäuses 9, durch Einschalten des zugehörigen Antriebsmotores 8 erreicht werden. Außerdem können die Antriebsmotore 8 gleich geschaltet werden und die inneren und äußeren Drehringe 4′,4˝ in gleicher Weise entweder am Blockgehäuse 9 oder aber am Drehflansch fest verschraubt werden, so daß ein doppeltes Drehmoment durch die Motorgleichschaltung der Antriebsmotoren 8 am außen liegenden Dreh-Stützlager der Drehflansch-Steckverbindungeb 2 und der innen, im Blockgehäuse 9 liegenden Dreh-Stützlager der Drehflansch-Steckverbindungen 2 wirksam wird.
Das Robot-Block-Normteil 1 der Fig. 6 ist prinzipiell aufgebaut wie das Robot-Block-Normteil 1 entsprechend der Fig. 4. Lediglich die Form und die Längenverhältnisse der Blockgehäuse 9 und der im Inneren befindlichen Strom- und Kommunikationskanäle 3 ist unterschiedlich zueinander. Der Multiblock-Robot gemäß der Fig. 7 ist aus Robot-Block-Normteilen 1 mit je vier Antriebsmotoren 8 pro Drehkranz der Drehverbindungen 6 ausgeführt, um das Antriebsmoment pro Drehflansch-Steckverbindung 2 zu erhöhen, bzw. die Dimensionierung und Baugröße der Antriebsmotoren 8 pro Drehflansch-Steckverbindung 2 möglichst klein zu halten. Die Robot-Block-Normteile 1 sind zum Teil mit den vertikalen oder horizontalen Drehflansch-Steckverbindungen 2 aneinander geflanscht, welches gleichbedeutend mit der Anflanschung an den Kopf-, Boden- oder an den Seitenflanschen der Drehflansch-Steckverbindungen 2 ist und zum Teil eine komplette Drehung in der Anflanschposition beinhaltet.
Deshalb sind in der Vorderansicht des gesamten Multiblock-Robots der Fig. 7, einige Robot-Block-Normteile 1 mit dem achteckigen Draufsichtprofil in gedrehter Position gezeichnet, entsprechend der Anflanschrichtung an einer Seite des langgestreckten Seitenprofils. Jedes Robot-Block-Normteil 1 ist entsprechend der Anbauposition und der Anwendungs-Zielsetzung, mit den erforderlichen Einbauelementen 11 ausgerüstet. So erhält das Robot-Block-Normteil 1 in Kopf-Position Einbauelemente 11 mit Empfangsantennen-Ausrüstung für den Empfang von Fernsteuerungsimpulsen, die an das darunter angeflanschte Robot-Block-Normteil 1 übermittelt werden. In dieses Robot-BlockNormteil 1 sind Einbauelemente 11 für Bilderkennung und Sensorik, für die Ortsorientierung des Multiblock-Robots eingebaut. Die Einbauelemente 11 des unterersten Robot-Block-Normteils 1, in der Mittellinie des Multiblock-Robots, bestehen aus Akkumulatoren für die aufladbare Stromversorung des Gesamtsystems. Die Robot-Block-Normteile 1 im Hand-Manipulationsbereich sind ebenfalls mit Einbauelementen 11 für die Bilderkennung ausgerüstet. Alle Robot-Block-Normbauteile erhalten Einbauelemente 11, die aus Infrarotsensoren, für die sichere Fortbewegung und Manipulation von Gegenständen bestehen. Der Multiblock-Robot hat als Gesamtsystem eine große Anzahl von Bewegungsfreiheitsgraden, wobei allein durch die überlagernden Drehbewegungen in den einzelnen Drehflansch-Steckverbindungen 2 und der wahlweisen Rotation der Blockgehäuse 9, oder aber der Drehflansch- Steckverbindungen 2, oder der Blockgehäuse 9 mit Drehflansch-Steckverbindungen 2 zusammen in einer Richtung, robot-spezifische Wirkungen erreicht werden. So wird über die Rotation nach vorne zur Mittenposition des Robot-Block-Normteils 1, das die Aufgabe des linken Manipulationsarms übernimmt und des Robot-Block-Normteils 1 mit der Aufgabe des rechten Manipulationsarms, bei Parallelstellung der Robot-Normteile 1 die als Hand-Manipulatoren ausgebildet sind, eine Greifwirkung erreicht, die es ermöglicht großvolumige Gegenstände aufzunehmen und zu manipulieren. D.h. durch gleichzeitige Rotation des oberen Manipulationsarms links in 45° abgewinkelter Position, und des direkt darunter angeordnenten Manipulationsarms der im 90° Winkel angeflanscht ist, zueinander, wird die Greifwirkung erzeugt, wenn gleichzeitig die Drehflansch-Steckverbindungen 2 der Ellbogengelenke, die Manipulationsvorderarme und der Handgelenke durch die Antriebsmotoren 8, horizontal und vertikal auf eine gemeinsame Höhe eingedreht werden. So erzeugt dann eine Rotation im Hüftbereich, im Bereich der Drehflansch-Steckverbindungen 2 des Robot-Block-Normteils 1 mit Verbindung zu den oberen Gelenken der Beinsektion der benachbarten Drehflansch-Steckverbindungen 2, eine Neigung des gesamten oberen Segmentes einschließlich der Manipulationsarme des Multiblock-Robots nach vorne. Über die Robot-Block-Normteile 1 der Beinsektion des Multiblock-Robots wird duch Eindrehen der Drehflansch-Steckverbindungen in der Kniegelenksektion und in der Hüftsektion eine Gehwirkung erzeugt. Die Fußsektion ist so ausgelegt, daß der Schwerpunkt des Multiblock-Robots wenn er auf einem Bein wie gezeichnet steht noch durch die Fußachse geht, so daß der Multiblock-Robot auf einem Bein stehen kann. Dabei sind alle Bewegungen in den übrigen Drehflansch-Achsen ungehindert aktivierbar, so daß über Drehung des gesamten Oberteils des Multiblock-Robots, ab Höhe der Hüftsektion, eine gewichtsverlagernde Position erreicht wird und ein sicheres Stehen des Multiblock-Robots auf beiden Fußsektionen und auch auf nur einer Fußsektion, sowie eine kippsichere Fortbewegung und Geh-Richtungsänderungg gegeben ist. Die Kippsicherheit wird durch Einbauelemente 11 für die Überwachung der jederzeitigen Gleichgewichtsstabilisierung gesteuert. Die zentrale, ungehinderte Hindurchführung der Strom- und Versorgungsleitungen 10 und der Kommunikations- und Steuerleitungen 13 durch die Strom- und Kommunikationskanäle 3 des Muliblock-Robots ermöglicht die Strom- und Kommunikations-Impulsverteilung von jedem Robot-Block-Normteil 1 zu jedem Robot-Block-Normteil 1, bei gleichzeitig ungehinderter, mehrachsiger Bewegungsfreiheit in den einzelnen Gelenkpunkten, an der Verbindungsstelle der Drehflansch-Steckverbindungen 2 von einem Robot-Block-Normteil 1 zu einem oder mehreren benachbarten Robot-Block-Normteilen 1.
Der Multiblock-Robot gemäß der Fig. 8 zeigt eine andere Lösung des Aufnehmens von großvolumigen Gegenständen. Hierbei werden die Armelemente der Robot-Block-Normteile 1, an zwei separaten Robot-Block-Normteilen 1 in gleicher Höhe angeflanscht und nicht in der Mittelachse und dann übereinander wie bei dem Multiblock-Robot der Fig. 7. Der Bewegungsablauf zur Erzielung der Greifwirkung bleibt ansonsten gleich und wird durch die gleichzeitige Rotation des linken Seitenteils an das die linke Armsektion angeflanscht ist und des rechten Seitenteils, an das die rechte Armsektion angeflanscht ist, erzeugt. Eine Neigung nach vorne, für Manipulationsbewegungen und stabilitätsausgleichende Vorwärtsbewegungen kann über mehre Gelenkpositionen erreicht werden. Einmal in der Höhe der Fußgelenke, der Robot-Block-Normteile 1, die im Kniebereich eingesetzt sind, in der Hüfposition und in der Halsposition, des Robot-Block-Normteils 1, das hier das Kopfsegment mit Richtantenne aufnimmt. So kann auch eine Neigung nach vorne des unteren Multiblock-Bereiches bis zu der Hüftebene, mit einer Rückneigung des Kopfsegmentes kombiniert werden und mit Drehbewegungen in den Fußgelenken gleichzeitig ausgeführt werden, so daß ein harmonischer Bewegungsablauf des Multiblock-Robots erreicht wird. Der Multiblock-Robot im oberen Zeichnungsteil der Fig. 8 wird ohne drehflexible Flanschabdichtungen 18 ausgeführt. Außerdem sind bei den Robot-Block-Normteilen 1, die über mehrerere Drehflansch-Steckverbindungen 2 verfügen und die nicht alle mit Drehflansch-Steckverbindungen 2 von Nachbar-Robot-Block-Normteilen 1 verbunden sind, die frei bleibenden Drehflansche der Drehflansch-Steckverbindungen 2 bis zu den Anschraubringen 5,5′ abgeschraubt, so daß nur die Stecker-Einheit 16 und Steckerbuchsen-Einheit 17 mit den Öffnungen der Strom- und Kommunikationskanäle 3 abzudecken ist. Diese Abdeckung erfolgt durch die im Durchmesser kleineren Drehflansch-Abdeckungen 19′ die nur auf die Zentrier- und Einraststecker 2′ die aus der Stecker-Einheit 16 des Strom- und Kommunikationskanals 3 herausragen, aufgeklemmt werden. Der Multiblock-Robot im unteren Zeichnungsteil der Fig. 8 zeigt zum Multiblock-Robot des oberen Zeichnungsteils, auch noch in dem mittleren Robot-Block-Normteil 1 eine andere Ausrüstung. Das mittlere, achteckige Robot-Block-Normteil 1 wird durch ein viereckiges Robot-Block-Normteil 1 mit Einbauelementen 11 in Monitorausführung ersetzt und das unter dem achteckigen Robot-Block-Normteil 1 positionierte Robot-Block-Normteil 1 wird durch ein Robot-Block-Normteil 1 mit Einbauelementen 11 in Minicomputerausführung mit Tastaturverbindung ersetzt, bei dem die Tastatur in das Robot-Block-Normteil aus- und einschiebbar ist. Außerdem werden die beiden Robot-Block-Normteile 1 links und rechts zum Robot-Block-Normteil 1, mit achteckiger Form gemäß der Draufsicht, durch Robot-Block-Normteile 1, mit Einbauelementen 11, in Diskettenausführung und mit Festplatten-Speicherkapazität ausgeführt, so daß dieser Multiblock-Robot, über die eingesetzten Robot-Block-Normeile 1 mit Minicomputerausführung, die Tastatur, den Monitor, die Disketten- und die Festplatten-Speicherkapazitäten autonom programmiert werden kann, oder aber wahlweise über das Robot-Block-Normteil 1 mit Einbauelementen 11 in Antennenbauweise und mit Fernbedienungs-Empfangseinheiten, oder aber in kombinierter Steuerung und Programmierung durch Einbauelemente 11 für Fernbedienung und die lokalen Programmierelemente, die zusätzlich auch Einbauelemente 11 für Spracheingabe und Sprachwiedergabe umfassen. Der Multiblock-Robot gemäß der Fig. 9 zeigt eine Anordnung von acht Robot-Block-Normteilen 1 in der Mittelachse übereinander mit der Anflanschung einer Beinsektion von Robot-Block-Normteilen 1 im Hüftbereich und vier Armsegmenten, entsprechend der Wirkungsweise des Multiblock-Robots der Fig. 4. Bei dieser vierarmigen Aufbauform wird eine gleichzeitige Greifwirkung des linken oberen Armsegments mit dem rechten unteren Armsegment durch Rotation der beiden zugehörigen, in einer gemeinsamen Mittelachse übereinander angeordneten Robotblock-Normteile 1 zueinander, erreicht. Entsprechend wird durch die Rotation des rechten oberen und des linken unteren Armsegments, eine Greifwirkung dieser beiden Armsegmente erreicht. Im Fußbereich ist zusätzlich zu den Robot-Block-Normteilen 1 der Fußsegmente, ein Robot-Block-Normteil 1 mit Vierrad-Anflanschung vorgesehen. Auch der Antrieb der vier Räder erfolgt über die Antriebsmotoren 8 und die Drehverbindungen 4. Hier in der Wirkungsweise eines Fahrantriebs des Multiblock-Robots, der unterstützend zur Gehbewegung der Fußsegmente eingesetzt wird, der Erhöhung der Standfestigkeit bei Manipulationsarbeiten dient und bei maschinellem Einsatz des Multiblock-Robots u.a. in Fertigungen und Labors, als autonomer Boden-Fahrantrieb eingesetzt wird, oder bei Drehung um 180° des gesamten Multiblock-Robots, als hängende Ausführung, mit autonomem Überkopf-Antrieb in Überkopf-Zweischienenbahnen.
Zusätzlich zu den Robot-Block-Normteilen 1 die in den Fig. 1 bis 9 dargestellt sind, werden bei unfangreichen Robot-Aufbauten Raster-Robot-Block-Normteile erstellt, die in den Gesamt-Rastermaßen, genau einem Vielfachen Einzelrastermaß von einzelnen Robot-Block-Normteilen 1 entsprechen, so daß wahlweise mehrere einzelne Robot-Normteile 1 von Drehflansch-Steckverbindung 2 bis zu mehreren Drehflansch-Steckverbindungen 2 in einer Verbindungslinie montiert werden, oder aber ein Rasterblock-Normteil eingesetzt werden kann, das nur eine Ausgangs-Drehflansch-Steckverbindung 2 und eine End-Drehflansch-Steckverbindung 2 in der gesamten Verbindungslinie besitzt und bei dem das Blockgehäuse 9 ununterbrochen durchgeführt wird, wobei das Gesamt-Rastermaß vom Ausgangspunkt der montierten Drehflansch-Steckverbindung 2 bis zum Endpunkt der letzten montierten Drehflansch-Steckverbindung 2 identisch ist und bei der Montage von einzelnen Robot-Block-Normteilen 1 hintereinander, oder bei Raster-Robot-Block-Normteilen 1, oder bei der Montage von kombinierten Raster-Robotblock-Normteilen mit einzelnen Robot-Block-Normteilen 1, die Endverbindungsflansche immer in der identischen Rastermaßposition sitzen. Außerdem werden Robot-Block-Normteile 1 in abgewinkelter Ausführung vorgesehen, die im richtungsändernden Winkel keine Drehverbindung 4 besitzen sondern deren Blockgehäuse 9 frei und ungetrennt durchläuft, wobei die Strom- und Kommunikationskanäle 3 in die abgewinkelte Richtung übergeführt werden, als wäre der Richtungswechsel durch die Verbindung von Robot-Block-Normteilen 1 über eine Drehflansch-Steckverbindung 2 erfolgt und die Anschluß-Rastermaße von der Drehflansch-Steckverbindung 2 in der Ausgangsposition, bis zur Drehflansch-Steckverbindung 2 in der Endposition genau identisch mit den Anschluß-Rastermaßen sind, die bei einer Montage durch geradlinige Robot-Block-Normteile 1 entsteht.
Außerdem werden Robot-Block-Normteile 1 vorgesehen, die in der Außenkontur der Blockgehäuse 9, der Robot-Block-Normteile 1, zueinander vieleckig, kugelförmig, rund, geschwungen, verjüngt, in unterschiedlichem Durchmesser und in unterschiedlichem Design ausgeführt werden, wobei die Anschluß-Rastermaße von einer Ausgangs-Drehflansch-Steckverbindung 2 bis zur End-Drehflansch-Steckverbindung 2 erhalten bleiben, so daß in der Außenkontur unterschiedlich geformte Robot-Block-Normteile 1 in den Anschluß-Rastermaßen immer identisch zueinander sind und miteinander verbunden werden können.
Die Drehflansch-Steckverbindungen 2 der Robot-Block-Normteile 1 werden bei mehrfachen Drehflansch-Steckverbindungen 2 an einem Robot-Block-Normteil 1 in unterschiedlichen Durchmessern und Dimensionierung ausgeführt, so daß ein Übergang von einer Drehflansch-Steckverbindung 2 mit großem Durchmesser auf eine Drehflansch-Steckverbindung 2 mit kleinem Durchmesser durch Wahl eines Anschlußes mit einer durchmesser kompatiblen Drehflansch-Steckverbindung 2, aus einer Anzahl von im Durchmesser und in der Dimensionierung unterschiedlichen Drehflansch-Steckverbindungen 2 am selben Robot-Block-Normteil 1 erfolgen kann.
Außerdem werden bei Automatisierungsaufgaben in Fertigungen, Transferstraßen und Produktionen Robot-Block-Normteile 1 aus annähernd gleichen Robot-Block-Normteilen 1 in langgestreckten, horizontalen und vertikalen Verzweigungen, über größere Entfernungen, zu selbstoperierenden Multiblock-Robot-Automatisierungslinien montiert, die mit selbstoperierenden Multiblock-Robots mit Geh- Fahr- und Manipulationseigenschaften kombiniert werden, die aus den gleichen Robot-Block-Normteilen 1 bestehen, so daß eine Kompatibilität zwischen den Multiblock-Robot-Automatisierungslinien und den Multiblock-Robots besteht und einzelne Robot-Block-Normteile 1 die in die Multiblock-Robot-Automatisierungslinien eingesetzt sind, wahlweise mit den Robot-Block-Normteilen 1 der Multiblock-Robots 1 ausgetauscht und miteinander varierend kombinierbar sind. Hierbei werden Robot-Block-Normteile 1 mit Einbauelementen 11 ausgerüstet, die Leistungsanschlüsse für den Netzbetrieb zum Anschluß an das öffentliche Stromnetz beinhalten. Diese Robot-Block-Normteile 1 werden in die kontinuierlich, horizontal und vertikal aneinandergeflanschten Robot-Block-Normteile 1, für den Aufbau von Multiblock-Robot-Automatisierungslinien, in Abständen zwischengesetzt und eine Stromeinspeisung vorgenommen.

## Patentansprüche

1. Robotsystem mit robot-spezifischen Wirkungsweisen, dadurch gekennzeichnet, daß aus annähernd baugleichen Robot-Block-Normteilen (1) Multiblock-Robots mit selbstoperierenden Geh- Fahr- und Manipulationseigenschaften montiert werden, die mit zueinanderpaßenden, horizontalen- und vertikalen Drehflansch-Steckverbindungen (2) ausgeführt werden, wobei jede Drehflansch-Steckverbindung (2) mit Einraststeckern (2′) und federbelasteten Einrastklemmhebel (2˝) ausgerüstet ist und eine Drehverbindung (4) mit Antriebsmotoren (8) erhält und mittig durch die Drehflansch-Steckverbindungen (2) ein Strom- und Kommunikationskanal (3) hindurchführt der Strom- und Versorgungsleitungen (10) und Kommunikations- und Steuerteitungen (13) aufnimmt die zu inneren- und äußeren Schleifring- und Induktivkörpern (10′,10˝) und zu weiteren Drehflansch-Steckverbindungen (2), zu den Antriebsmotoren (8) und je nach Anwendungs-Zielsetzungen, zu Einbauelementen (11), bestehend aus Akkumulatoren, aus Sensoren, aus Elektronikplatinen, im Inneren der Blockgehäuse (9) führen, daß die Strom- und Versorgungsleitungen (10) an den Enden des Strom- und Informationskanals (3) in Steckereinheiten (16) mit Steckkontakten (16′) und in Steckerbuchsen-Einheit (17) mit Steckerbuchsen (17′) geführt werden wobei die Drehflansch-Steckverbindungen (2) mit dem mittigen Strom- und Kommunikationskanal (3) über die Drehverbindungen (4) und die Antriebsmotoren (8) um die eigene Mittelachse gedreht und angetrieben werden und das Blockgehäuse (9) still steht, daß die Drehflansch-Steckverbindungen (2) mit dem Strom- und Kommunikationskanal (3) still steht und nur das Blockgehäuse (9) rotiert, daß die Drehflansch-Steckverbindung (2) mit dem Strom- und Kommunikationskanal (3) und das Blockgehäuse (9) gemeinsam, über das Robot-Block-Normteil (1) einer Nachbar-Drehflansch-Steckverbindung (2) angetrieben werden, oder aber nur die Drehflansch-Steckverbindung (2) mit dem Strom- und Informationsleitungskanal (3) durch eine Nachbar-Drehflansch-Steckverbindung (2) angetrieben wird und dabei das Blockgehäuse (9) still steht und daß durch die Drehflansch- zu Drehflansch-Steckverbindungen (2) ein zusammengesteckter Multiblock-Robotaufbau über die Zentrierung durch die Einraststecker (2′), die Klemmwirkung der federbelasteten Einrastklemmhebel (2˝), den Kontaktschluß der Steckereinheiten (16) und der Steckerbuchsen-Einheit (17) zueinander und der Robot-Block-Normteile (1) untereinander erreicht wird, der über die Drehverbindungen (4) und die Antriebsmotoren (8), durch reine Drehkraftübertragungen, je nach Zusammenstecken von Robot-Block-Normteilen (1) mit unterschiedlichen Anwendungs-Zielsetzungen, variierbare Manipulations- und Fortbewegungen in mehrachsigen Bewegungsfreiheitsgraden durchgeführt werden.

2. Robotsystem nach Anspruch 1 dadurch gekennzeichnet, daß die nicht genutzten Flansche der Drehflansch-Steckverbindungen (2) von montierten Robot-Block-Normteilen (1), durch Drehflansch-Abdeckungen (19) erfolgt und eine Abdichtung zwischen verbundenen Robot-Block-Normteilen (1) über drehflexible Faltenbalge (18) erfolgt, die sich über die abzudichtenden Drehflansch-Steckverbindungen (2) spannen und an den Blockgehäusen (9) fest verschraubt werden und daß die Robot-Block-Normteile (1) für die Wartung und den Zugriff zu den Einbauelementen (11) den Antriebsmotoren (8) und den weiteren Bauteilen in den Robot-Block-Gehäusen (9) mit Zugriffsöffnungen 9′ ausgerüstet werden, die durch federbelastete Drehklappen 9˝ verschlossen werden.

3. Robotsystem nach Anspruch 1 oder 2 dadurch gekennzeichnet, daß bei unfangreichen Robot-Aufbauten Raster-Robot-Block-Normteile erstellt, die in den Gesamt-Rastermaßen, genau einem Vielfachen Einzelrastermaß von einzelnen Robot-Block-Normteilen (1) entsprechen, so daß wahlweise mehrere einzelne Robot-Normteile (1) von Drehflansch-Steckverbindung (2) bis zu mehreren Drehflansch-Steckverbindungen (2) in einer Verbindungslinie montiert werden, oder aber ein Raster-Robot-Block-Normteil eingesetzt werden kann, das nur eine Ausgangs-Drehflansch-Steckverbindung (2) und eine End-Drehflansch-Steckverbindung (2) in der gesamten Verbindungslinie besitzt und bei dem das Blockgehäuse (9) ununterbrochen durchgeführt wird, wobei das Gesamt-Rastermaß vom Ausgangspunkt der montierten Drehflansch-Steckverbindung (2) bis zum Endpunkt der letzten montierten Drehflansch-Steckverbindung (2) identisch ist und bei der Montage von einzelnen Robot-Block-Normteilen (1) hintereinander, oder bei Raster-Robot-Block-Normteilen (1), oder bei der Montage von kombinierten Raster-Robot-Block-Normteilen (1) mit einzelnen Robot-Block-Normteilen (1), die Endverbindungsflansche immer in der identischen Rastermaßposition sitzen.

4. Robotsystem nach Anspruch 1,2 oder 3 dadurch gekennzeichnet, daß abgewinkelte Robot-Block-Normteile (1) eingesetzt werden, die in richtungsändernder Position keine Drehverbindung besitzen sondern deren Blockgehäuse (9) ungetrennt frei durchläuft, wobei die Strom- und Kommunikationskanäle (3) in die abgewinkelte Richtung übergeführt werden, als wäre der Richtungswechsel durch die Verbindung von Robot-Block-Normteilen (1) über die Drehflansch-Steckverbindung (2) erfolgt und die Anschluß-Rastermaße von der Drehflansch-Steckverbindung (2) in der Ausgangsposition, bis zur Drehflansch-Steckverbindung (2) Endposition genau identisch mit den Anschluß-Rastermaßen ist, die bei einer Montage durch geradlinige Robot-Normteile (1) entsteht.

5. Robotsystem nach Anspruch 1,2,3, oder 4 dadurch gekennzeichnet, daß die Außenkontur der Blockgehäuse (9), der Robot-Normteile (1) vieleckig, kugelförmig, rund, geschwungen, verjüngt, in unterschiedlichem Durchmesser und in untersschiedlichem Design ausgeführt wird wobei die Anschluß-Rastermaße von der Ausgangs-Drehflansch-Steckverbindung (2) bis zur End-Drehflansch-Steckverbindung (2) erhalten bleiben, so daß in der Außenkontur unterschiedlich geformte Robot-Normteile (1) in den Anschluß-Rastermaßen immer identisch zueinander sind und miteinander verbunden werden können.

6. Robotsystem nach einem der Ansprüche 1,2,3,4 oder 5 dadurch gekennzeichnet, daß die Drehflansche der Drehflansch-Steckverbindungen (2) der Robot-Block-Normteile (1) bei der Ausführung mit mehrfachen Drehflansch-Steckverbindungen (2) an einem Robot-Block-Normteil (1) in unterschiedlichen Durchmessern und Dimensionierung ausgeführt werden, so daß ein Übergang von einem Drehflansch einer Drehflansch-Steckverbindung (2) mit großem Durchmesser auf einen Drehflansch einer Drehflansch-Steckverbindung (2) mit kleinem Durchmesser durch Wahl eines Anschluß-Flansches der durchmesser kompatible ist und aus einer Anzahl von im Durchmesser und in der Dimensionierung unterschiedlichen Flanschen der Drehflansch-Steckverbindungen (2) am selben Robot-Block-Normteil (1) erfolgen kann.

7. Robotsystem nach einem der Ansprüche 1,2,3,4,5 oder 6 dadurch gekennzeichnet, daß Robot-Block-Normteile (1) mit Einbauelementen (11) in Monitorausführung ausgeführt werden, in Minicomputerausführung mit Tastaturverbindung, bei dem die Tastatur in das Robot-Block-Normteil (1) aus- und einschiebbar ist, mit Festplatten-Speicherkapazität, mit Fernbedienungsbauteilen und mit Sprech-Eingabe- und Ausgabemodulen, so daß eine Steuerung und Programmierung des Multiblock-Robots durch Kombinierung der Robot-Block-Normteile (1) mit diesen Einbauelementen (11), über Fernbedienung und lokale Programmierung, über Tastatur- und Spracheingabe, mit Sprachwiedergabe und durch Monitorwiedergabe erfolgt.

8. Robotsystem nach einem der Ansprüche 1,2,3,4,5,6 oder 7 dadurch gekennzeichnet, daß Robot-Block-Normteile (1) aus annähern gleichen Bauteilen in langgestreckten, horizontalen- und vertikalen Verzweigungen, über größere Entfernungen, zu selbstoperierenden Multiblock-Robot-Automatisierungslinien montiert werden, die mit selbstoperierenden Multiblock-Robots mit Geh- Fahr- und Manipulationseigenschaften kombiniert werden, die aus den gleichen Robot-Block-Normteilen (1) bestehen, so daß eine Kompatibilität zwischen den Multiblock-Robot-Automatisierungslinien und den Multiblock-Robots besteht und einzelne Robot-Block-Normteile (1) die in die Multiblock-Robot-Automatisierungslinien eingesetzt sind, wahlweise mit den Robot-Block-Normteilen (1) der Multiblock-Robots (1) austauschbar und miteinander variierend kombinierbar sind und daß zur Leistungsversorgung der verzweigten Multiblock-Robot-Automatisierungslinien, Robot-Block-Normteile (1) mit Einbauelementen (11) ausgerüstet werden die Leistungsanschlüsse für den Netzbetrieb zum Anschluß an das öffentliche Stromnetz beinhalten und daß diese Robot-Block-Normteile (1) in die Multiblock-Robot-Automatisierungslinie der kontinuierlich, horizontal- und vertikal aneinandergeflanschten Robot-Block-Normteile (1) montiert und in Abständen zwischengesetzt werden und eine Stromeinspeisung vorgenommen wird, die eine konstante Stromversorgung bei Automatisierungsaufgaben in Fertigungen, Transferstraßen und Produktionen des gesamten, verzweigten Multiblock-Robot Aufbaus gewährleistet.

## Claims

1. A Robotsystem with robot-specific effects, characterized in that out of various standard robot-block-parts (1) of nearly the same design, multiblock-robots are mounted with self operating walk, drive and manipulating faculties with horizontally and vertically dimension-fitting rotation-flange plug connections (2), that every rotation-flange plug connection (2) is provided with engaging plugs (2′) and engaging spring-loaded clamp levers (2˝) and has a turntable (4) with driving motor (8) and with current and communication channels (3) for current and supply conducters (10), control and communcation conducters (13) in the center line, guiding to inner and outer slip-ring and induction units (10′,10˝) and to further rotation-flange plug connections (2), to driving motors (8) and in accordance with the user intention, to built-in components (11), composed of accumulators, sensors, electronic boards within the robot-block chambers (9), that the current and supply lines (10) are guided to plug units (16) with plug connections (16′) and plug sleeves (17) provided at the end of every current and communication channel (3), that the rotation-flange plug connection (2) with center line current and communication channel (3) is rotated to the center axis by means of the driving motors (8) whereas the block chamber (9) itself is not rotated, or that the rotation-flange plug connection (2) with the current and communication channel (3) is not rotated and only the block chamber (9) is rotated, where the rotation-flange plug connection (2) with the current and communication channel (3) together with the block chamber (9) is rotated by means of the rotation-flange of an adjacent standard robot-block-part (1), or that only the rotation-flange plug connection (2) with current and communication channel (3) is rotated by means of the rotation-flange of an adjacent standard robot-block-part (1) and the block chamber (9) itself is not rotated, that from one rotation-flange plug connection (2) to the next rotation-flange plug connection (2) a multi-block robot assembly is put together by means of the centering effect of the engaging plugs (2′), the clamping effect of the spring-loaded clamp levers (2˝), the contact closing between the plug connection units (16) and the plug sleeve units (17) of one standard robot-block part (1) with the other and that only by rotary power, variable manipulations and locomotions with multi-axis free-motion efficiency is provided, by means of the turntables (4) and the driving motors (8), in accordance with the assembled standard robot-block parts (1) put together for the most different user application purposes.

2. The system defined by claim 1, characterized in that a covering (19) is provided for the rotation plug connections (2) whenever a rotation flange plug connection (2) of a standard robot-block part (1) is not used in connection with a further rotation flange plug connection (2) of a further standard robot-block part (1) and that a sealing is achieved between the rotation flange plug connections (2) by rotation flexible, pleated coverings (18) which are screwed at the block chamber (9) and bridge from one standard robot-block part (1) to the next adjacent standard robot-block part (1) covering and sealing the rotation flange plug connections (2), that the block chamber (9) has access openings (9′) for maintanance purposes and access to the built-in components (11), to the driving motors (8) and to further components inside the standard robot-block parts (1), that the access openings (9′) are locked by rotary flaps (9˝).

3. The system defined by claim 1 or 2, characterized in that standard-raster robot-block parts (1) are provided for extensive standard robot-block installations, where its total dimensions equal precisly the multiple of a single-raster robot-block part (1), in a way that optionally a multitude of single-raster standard robot-block parts (1) from one rotation flange (2) to the next rotation flange plug connection (2) can be provided in one continuous connection line of many individual standard robot-block parts (1), or there is for the same solution with only one standard-raster robot-block part with only one rotation flange plug connection (2) in starting-point position and one rotation flange plug connection (2) in end-point position and the block chamber (9) is leaded uninterrupted, continuously from the starting-point to the end-point-position and the total-raster dimension from starting-point to the end-point position of the rotation flange plug connections (2) is identical to the manifold, individual standard robot-block part plug connections (2) in a continuous connection line, furthermore independently of the installation otption, of individual standard robot-block parts (1), or of standard-raster robot-block parts (1), or of combined individual and standard raster robot-block parts (1) one behind the other, the rotation plug connections (2) are always in identical raster-dimension position.

4. The system defined by claim 1,2 or 3, characterized in that standard robot-block parts (1) are provided of an angular design without a turntable (4) in the direction changing angular position, but with a block chamber (9) which is continuously shaped and where the current and communication channels (3) are leaded to the angular position as if the direction changing has been achieved by the connection of standard robot-block parts (1) with the belonging rotation flange plug connections (2), and that the plug connection raster-dimension of the angular standard robot block-parts from the rotation flange plug connection (2) in starting-position (1) up to the rotation flange plug connection (2) in end-position is always precisly identical with the plug connection raster dimension of an installation with straight-lined standard robot-block parts (1).

5. The system defined by claim 1,2,3 or 4, characterized in that standard robot-block parts (1) are provided which are different at the outer contour of the block chamber (9) and are ploynomial, spherical, cylindrical, bended, tapered shaped, of different diameter and have the most different design, that the plug connection raster dimensions of these standard robot block parts (1) from a rotation flange plug connection (2) in starting-point position up to the rotation flange plug connection (2) in end-point position are always compatible to each other, so that standard robot-block parts (1) of the most different outer contour are always identical in its plug connection raster-dimensions for a mutual plug connection in every optional position.

6. The system defined by claim 1,2,3,4 or 5 characterized in that standard robot-block parts (1) are propvided with a multitude of rotation flange plug connections (2) with different diameters and dimensions which are mutually plug connection compatible, so that a transition is achieved from a standard robot-block part (1) and rotation flange plug connections (2) with small diameters to a standard robot-block part (1) and to the belonging rotation flange plug connections (2) with a large diameters, thus, providing an option for the the mutual connection of standard robot-block parts (1) by means of a multitude of rotation flange plug connections (2) with different diameters and dimensions at the same standard robot-block part (1).

7. The system defined by claim 1,2,3,4,5 or 6 characterized in that standard robot-block parts (1) are provided with built-in components (11) in monitor and mini-computer design with a keybord which is sliped retractably into the standard robot-block part (1), with a diskette and a hard disk storage unit and with remote control components and speech control and speech reproduction modules, so that the control and programming of a multi-block robot is achieved by a combination of standard robot-block parts (1) equiped with these built-in components (11), by means of remote control or local control, by a keyboard and by speech control, speech reproduction and monitor reproduction.

8. The system defined by claim 1,2,3,4,5,6 or 7 characterized in that standard robot-block parts (1) are provided of nearly the similar design, installed in long streched, horizontal and vertical networks, over great distances, operating as self operating multiblock-robot automatic-lines which are combined with self operating multiblock-robots with walk, drive and manipulating faculties, composed out of the same standard robot-block parts (1), so that, a compatibility exists between multiblock-robot automatic-lines and the self operating multiblock robots with walk, drive and manipulating faculties, and standard robot-block parts (1) belonging to the multiblock-robot automatic-lines are optionally, in varied combinations, interchangeable with standard robot-block parts (1) belonging to the multiblock-robots with walk, drive and manipulating faculties, and that furthermore for the long streched multiblock-robot automatic-lines are provided standard robot-block parts (1) with built-in components (11) for the mains supply from the public network, and that these standard robot-block parts (1) are flanged in needed distances between the continuously, horizontally and vertically, one behind the other flanged standard robot-block parts (1), for the constant power supply of the multiblock-robot automatic-lines and the entire multiblock-robot network in plants, productions and transfer streets.

## Revendications

1. Système de robot au fonctionnement spécifiquement robotique, caractérisée en ce que des robots modulaires d'un caractère d'actionnement à pied et à roues et d'une faculté de manipulation auto-opérationnelle, sont montés par des pièces standardisées de bloc-robot (1) d'une forme de construction à peu près identique comportant des brides pivotantes à connexion enfichable (2) ajustées les une par rapport aux autres, et en ce que chaque bride pivotante à connexion enfichable (2) est équipée avec des fiches d'encliquetage (2′) et des leviers inter-appui d'encliquetage (2˝) commandées par ressort et avec des couronnes de pivotement (4) à moteurs de commande (8), et en ce que à l'axe central, à travers la bride pivotante à connexion enfichable (2) est prévue une conduite de courant et de communication (3) qui comporte des conducteurs de courant et d'alimentation (10), ainsi que des conducteurs de communication et de commande (13) qui sont conduits aux corps d' anneau collecteur et d'induction intérieurs et extérieurs (10′,10˝) et aux autres brides pivotantes à connexion enfichable (2), aux moteurs de commande (8) et dépendant du champ d'application, ils sont en outre conduits aux objets encastrés (11) se composant des accumulateurs, des sensors, des platines éléctroniques à l'intérieur des blocs-boîtier (9), en ce que les conducteurs de courant et d'alimentation (10) comportes aux bouts des conduites de courant et de communication (3) des unités de fiche (16) avec contacts à fiche (16′), des unités d'alvéoles (17) et contacts femelles (17′), et en ce que les brides pivotantes à connexion enfichable (2) avec la conduite de courant et de communication centrale (3) sont pivotées et mouvées autour de l'axe propre par les couronnes de pivotement (4) pendant que les moteurs de commande (8) et le bloc-boîtier (9) sont immobiles, que les brides pivotantes à connexion enfichable (2) sont immobile et seulement le bloc-boitier (9) est pivoté, que les brides pivotantes à connexion enfichable (2) avec la conduite de courant et de communication (3) et le bloc-boîtier (9) ensemble sont mouvés par la pièce standardisée de bloc-robot (1) d'une bride pivotante à connexion enfichable (2) en voisinage, ou seulement la bride pivotante à connexion enfichable (2) avec la conduite de courant et de communication (3) est mouvé par la bride pivotante à connexion enfichable (2) en voisinage pendant que le bloc-boîtier (9) est immobile, et en ce que par les brides pivotantes à connexion enfichable (2), les une montée par rapport aux autres, la structure d'un robot modulaire à connexion enfichée est composé qui est realisée par le centrage des fiches d'encliquetage (2′), le serrage des leviers inter-appui d'encliquetage (2˝) commandées par ressort, I'exécution des contacts des unités de fiche (16) et des unités d'alvéoles (17) les une par rapport aux autres et mutuellement entre les pièces standardisées de bloc-robot (1), qui peut opérer seulement par la transmission de force de pivotement des couronnes de pivotement (4) et des moteurs de commande (8), et qui peut exécuté, dépendant d'enfichage des pièces standardisées de bloc-robot (1) et des objectifs d'utilisation individuels, des manipulations et déplaçements variables d'une liberté de mouvement en multi-axis degrés.

2. Système de robot selon la revendication 1, caractérisé en ce que les brides non utilisées des brides pivotantes à connexion enfichable (2) apartenant aux pièces standardisées de bloc-robot (1) montées, comportent un capot de brides et qu'une étanchéité est réalisé entre les pièces standardisées de bloc-robot (1) par des soufflets d'accouplement flexible aux rotations (18) qui sont raccordés à vis avec les blocs-boîtier (9) et qui s'étendent à l'extérieure sur les parties des brides pivotantes à connexion enfichable (2) qui sont à étancher, et en ce que les pièces standardisées de bloc-robot (1) comportent des ouvertures d'accès (9′)pour la maintenance et l'accès aux objets encastrés (11), aux moteurs de commande (8), et aux autres objets à l'intérieur des blocs-boîtier (9) et que les ouvertures d'accès (9) sont enfermés avec des volets rotatifs commandés par ressort (9˝).

3. Système de robot selon la revendication 1 ou 2, caractérisé en ce que dans le cas des installations de robot étendues, des pièces standardisées de bloc-robot (1) en dimension de quadrillage sont prévues dont les dimensions de quadrillage totales correspondent précisément au multiple de la dimension de quadrillage d'une seule pièce standardisée de bloc-robot (1), optionalement de façon que plusieurs des pièces standardisées de bloc-robot (1) individuelles par rapport d'une bride pivotante à connexion enfichable (2) à plusieurs brides pivotantes à connexion enfichable (2) sont montées en une ligne de connexion, ou les remplacant, sur la même ligne de connexion est montée seulement une pièce standardisée de bloc-robot (1) en dimension de quadrillage avec une bride pivotante à connexion enfichable (2) au point de départ et seulement une bride pivotante à connexion enfichable (2) au point d'extrémité et dont le bloc-boîtier (9) n'a pas une discontinuité à toute cette longueur de connexion, de manière que la dimension de quadrillage totale du point de départ de la bride pivotante à connexion enfichable (2) montée jusqu'au point d'extrémité de la dernière bride pivotante à connexion enfichable (2) montée est identique, de sorte qu'independement d'un type des pièces standardisées de bloc-robot (1) l'un derière l'autre, soi individuel, soi en dimension de quadrillage ou soi du type combiné, pour chaque type, les brides à connexion au point d'extrémité sont toujours conforme aux mesures dans la position de quadrillage identique.

4. Système de robot selon la revendication 1,2 ou 3, caractérisé en ce que des pièces standardisées de bloc-robot (1) avec déviation angulaire sont prevues qui dans la position de la direction changeant ne disposent pas d'une couronne de pivotement mais dont les blocs-boîtier (9) n'ont pas une discontinuité de cette sorte à toute la longueur, de façon que les conduites de courant et de communication (3) sont transposées comme si serais réalisé une deviation de direction par la connexion des pièces standardisées de bloc-robot (1) avec les brides pivotantes à connexion enfichable (2), de sorte que les dimensions de quadrillage de la connexion à partir de la bride pivotante à connexion enfichable (2) dans la position du point de départ jusqu'au la bride pivotante à connexion enfichable (2) dans la position du point d'extrémité sont précisement identique aux dimensions de quadrillage de la connexion qui sont réalisé pour une installation des pièces standardisées de bloc-robot (1) linéaire.

5. Système de robot selon la revendication 1,2 ,3 ou 4, caractérisé en ce que la contour extérieure des blocs-boîtier (9) des pièces standardisées de bloc-robot (1) est polygonal, sphérique, rond, incurvé, conique, d'un diametre différent et d'un dessin différent de façon que les dimensions de quadrillage de la connexion à partir de la bride pivotante à connexion enfichable (2) dans la position du point de départ jusqu'au la bride pivotante à connexion enfichable (2) dans la position du point d'extrémité sont maintenues, de sorte que des pièces standardisées de bloc-robot (1) d'une différente contour extérieure sont toujours mutuellement identique dans les dimensions de quadrillage de la connexion et en combinaison peuvent être connectées ensemble.

6. Système de robot selon la revendication 1,2 ,3 4 ou 5, caractérisé en ce que dans le cas d'une exécution avec plusieurs brides pivotantes à connexion enfichable (2) pour une pièce standardisée de bloc-robot (1), ces brides pivotantes à connexion enfichable (2) apartenant à cette pièce standardisées de bloc-robot (1) sont exécutées aux diamètres et aux dimensions differents, de façon qu'une compatibilité et adaptation est réalisée entre une bride pivotante à connexion enfichable (2) d'un grand diamètre avec une bride pivotante à connexion enfichable (2) d'un petit diamètre, de sorte que la connexion la meilleure adaptée peut toujours être trouvée, regardant les diamètres et les dimensions les plus differentes entre les plusieurs brides pivotantes à connexion enfichable (2), prevues pour une seule pièce standardisée de bloc-robot (1).

7. Système de robot selon la revendication 1,2 ,3, 4,5 ou 6, caractérisé en ce que les pièces standardisées de bloc-robot (1) comportent des objets encastrés (11) qui sont exécuté comme écran, comme mini-ordinateur avec connexion d'un clavier, de manière que le clavier est rétractable et repliable de la pièce standardisée de bloc-robot (1), qui disposent, en outre, d'une capacité-mémoire à un disque dur, des objéts pour la commande à distance, des modules d'entrée et de sortie de communication par langage, de sorte qu'une commande et programmation du robot modulaire est réalisable basé sur la combinaison des pièces standardisées de bloc-robot (1) qui sont équipé avec ces objets encastrés (11) et exécuté par télé-commande, programmation locale, par clavier, par entrée-sortie de langage et par reproduction à l'écran.

8. Système de robot selon la revendication 1,2,3, 4,5, 6 ou 7, caractérisé en ce que les pièces standardisées de bloc-robot (1) d'une forme de construction à peu près identique installées, s'étendent à une grande distance sur un branchement longitudinal, horizontal et vertical, et constituant des lignes auto-opérationnelles de robot modulaire qui sont combinés aux pièces standardisées de bloc-robot (1) auto-opérationnelles d'un caractère d'actionnement à pied et à roues et d'une faculté de manipulation et qui se composent aux mêmes pièces standardisées de bloc-robot (1), d'une maniere qu'une compatibilité est réalisé entre les lignes auto-opérationnelles de robot modulaire et les robots modulaires (1) individuels et que des pièces standardisées de bloc-robot (1) individuelles (2) qui sont installées aux lignes auto-opérationnelles de robot modulaire peuvent être optionalement échangées et variablement combinées avec les pièces standardisées de bloc-robot (1) apartenant aux robot modulaire, et en ce que pour l'approvisement de puissance aux lignes auto-opérationnelles de robot modulaire, des pièces standardisées de bloc-robot (1) comportent des objets encastrés (11) qui sont équipé d'un branchement au réseau et pour l'alimentation du réseau publique, de sorte que ces pièces standardisées de bloc-robot (1) peuvent être prévues et interposées à distance l'une de l'autre dans les lignes auto-opérationnelles de robot modulaire qui sont composés en continuation, horizontalement et verticalement par la connexion des pièces standardisées de bloc-robot (1), de façon qu'une alimentation de courant est réalisé et un approvisionnement de courant constant de l'installation totale du branchement de robot modulaire est assuré dans le cas des objéctifs d'automation aux fabrications, aux rues de transfers et aux productions.
